# EUROPÄISCHE PATENTSCHRIFT

(11) **EP 2 678 087 B1**
(45) Veröffentlichungstag und Bekanntmachung des Hinweises auf die Patenterteilung: **07.03.2018**
(21) Anmeldenummer: 11744003.2
(22) Anmeldetag: 11.08.2011
(51) Int. Cl.: B01D 33/21, D21C 9/06, D21C 9/18, D21D 5/04

(54) **SCHEIBENFILTER**
DISK FILTER
FILTRE À DISQUES

(30) Priorität: 23.08.2010 DE 102010039650
(43) Veröffentlichungstag der Anmeldung: 01.01.2014
(73) Patentinhaber: Voith Patent GmbH, 89522 Heidenheim (DE)
(72) Erfinder: BERGSTRÖM, Jonas, N-1394 Nesbru (NO)
(74) Vertreter: Kunze, Klaus
(86) Internationale Anmeldenummer: PCT/EP2011/063819
(87) Internationale Veröffentlichungsnummer: WO 2012/025391

(56) Entgegenhaltungen:
- JP-A- 7 155 565
- US-A- 3 950 254
- US-A- 4 138 338
- US-A- 5 316 675
- US-A- 5 820 756

## Beschreibung

Die Erfindung betrifft einen Scheibenfilter zur Abtrennung von Flüssigkeiten aus einer Suspension, insbesondere einer Faserstoffsuspension, mit einem Behälter zur Aufnahme der Suspension, einer sich horizontal im Behälter erstreckenden und rotierbar gelagerten Hohlwelle, mehreren senkrecht auf der Hohlwelle befestigten, axial voneinander beabstandeten und flüssigkeitsdurchlässigen Filterscheiben, deren Innenraum mit der Hohlwelle in Verbindung steht sowie zwischen den Filterscheiben angeordneten Stoffausläufen.

Derartige Scheibenfilter werden zur Eindickung der Suspension und in der Papierindustrie insbesondere zur Faserstoffrückgewinnung eingesetzt.

Hierzu ist die Hohlwelle in der Regel mit einer Unterdruckquelle verbunden. Auf den Filterscheiben bildet sich infolge des Druckunterschieds zwischen der Faserstoffsuspension und dem Innenraum der Filterscheiben eine Vliesschicht. Beim Eintauchen der Filterscheiben in die Faserstoffsuspension gelangt so weitestgehend nur Wasser in den Innenraum der Filterscheiben und damit die Hohlwelle.

Die Vliesschicht wird beim Auftauchen über Schaber entfernt und zum entsprechenden Stoffauslauf geführt oder mit Wasser in den Stoffauslauf gespritzt. Nachteilig hierbei ist, dass sich insbesondere im Bereich der Engstelle zwischen den Stoffausläufen und den Filterscheiben Bereiche mit hoher Stoffdichte bilden, die zu einer hohen mechanischen Belastung der Filterscheiben insbesondere in axialer Richtung führen, was Beschädigungen und erhöhten Verschleiß zur Folge haben kann. Ein Beispiel eines gattungsgemäßen Scheibenfilters ist in der US 5,316,675 offenbart.

Die Aufgabe der Erfindung ist es daher die mechanische Belastung der Filterscheiben mit möglichst geringem Aufwand zu vermindern.

Erfindungsgemäß wurde die Aufgabe dadurch gelöst, dass am Außenumfang der Filterscheibe wenigstens ein sich radial über die Filterscheibe hinaus erstreckendes Führungselement vorhanden ist, welches in der Suspension durch mehrere, in Rotationsrichtung hintereinander angeordnete und ein Verbiegen der Filterscheibe in axialer Richtung begrenzende Führungskanäle des Behälters geführt wird.

Hierbei wurde erkannt, dass der Austausch der Suspension im Bereich der Engstelle zwischen den Stoffausläufen und den benachbarten Filterscheiben und dem Rest des Behälters stark eingeschränkt ist. Infolgedessen kommt es zur Bildung einer erhöhten Stoffdichte im Bereich dieser Engstellen, was zu den erhöhten axialen Belastungen der Filterscheiben führt.

Einer Erhöhung der Belastbarkeit der Filterscheiben sind allein schon wegen ihrer Durchlässigkeit enge Grenzen gesetzt.

Jedoch kann über die Führungselemente auf einfache Weise für einen intensiveren Austausch der Suspension der Engstelle mit dem Rest im Behälter gesorgt werden. Infolgedessen kann ein Ansteigen der Stoffdichte im Bereich der Engstelle verhindert oder zumindest stark behindert werden.

Des Weiteren sorgen die Führungskanäle für eine entsprechende axiale Führung der Führungselemente und damit der Filterscheibe während der Rotation. Infolgedessen kann ein zu starkes Verbiegen der Filterscheiben in axialer Richtung wirksam verhindert werden.

Um diese Führungswirkung möglichst umfassend zu erreichen, sollten über den Außenumfang der Filterscheibe, vorzugsweise gleichmäßig verteilt, mehrere Führungselemente angeordnet werden.

Dabei ergeben sich optimale Ergebnisse, wenn die radiale Länge der Führungselemente über den Außenumfang der Filterscheiben hinaus größer als 20 mm und kleiner als 120, vorzugsweise kleiner als 70 mm ist.

Entsprechend der Konstruktion, insbesondere dem Radius der Filterscheiben sowie den Anforderungen und Belastungen kann es von Vorteil sein, wenn die Führungselemente von sich in radialer Richtung auf den Außenumfang der Filterscheiben erstreckenden Führungsbolzen und/oder von sich in Umfangsrichtung erstreckenden Leisten gebildet werden.

Konstruktiv einfach ist es hierbei, wenn sich die Leisten ausschließlich über den Außenumfang der Filterscheibe erstrecken.

Zur Intensivierung ihrer Wirkung insbesondere auch auf den Bereich nahe des entsprechenden Stoffauslaufs kann es allerdings von Vorteil sein, wenn sich die Leisten auf beiden Seiten oder wenigstens auf eine, vorzugsweise einem Stoffauslauf gegenüberliegende Seite der Filterscheibe erstrecken.

Davon unabhängig sollte die Ausdehnung der Leisten in Umfangsrichtung der Filterscheibe zwischen 50 und 250 mm, vorzugsweise zwischen 50 und 150 mm liegen.

Im Interesse einer einfachen Konstruktion sollten die Führungskanäle jeweils von zwei parallelen, axial voneinander beabstandeten, am Behälter befestigten und vorzugsweise überwiegend in Rotationsrichtung verlaufenden Führungsschienen gebildet werden. Dabei ist es vorteilhaft, wenn der Abstand der Führungselemente zu den Begrenzungen des Führungskanals kleiner als 10 mm, vorzugsweise kleiner als 5 mm ist.

Hinsichtlich des Stoffauslaufs ist es von Vorteil, wenn sich diese in Höhe des Suspensionspegels nur über einen radial innen liegenden Teilabschnitt der Filterscheiben erstrecken, insbesondere möglichst nahe zur Hohlwelle angeordnet sind und sich über 40 bis 60% des Radius der Filterscheiben erstrecken.

Herstellung und Montage der Filterscheiben vereinfachen sich, wenn diese kreissektorförmig aufgebaut sind. Um den Ausgleich der Stoffdichte noch weiter zu fördern, sollten die Filterscheiben auch radial verlaufende Leisten aufweisen.

Dabei sollte wenigstens auf der, einem Stoffauslauf gegenüberliegenden Seite der Filterscheibe wenigstens eine Leiste angeordnet sein.
Diese Leiste führt so während der Rotation einen Teil der Suspension aus der Engstelle und Suspension aus dem Rest des Behälters in die Engstelle, so dass sich die Stoffdichte ausgleicht.
Da sich die Stoffausläufe in Höhe des Suspensionspegels nur über einen radial innen liegenden Teilabschnitt der Filterscheiben erstrecken, ist auch der Kanal zwischen Filterscheibe und Stoffauflauf auf einen radial inneren Teilabschnitt begrenzt. Dies vermindert die mechanische Beanspruchung der Filterscheiben erheblich. Außerdem kann so ein wesentlicher Teil der von den Leisten mitgeschleppten Suspension beim Auftauchen der Leisten aus der Suspension radial außen problemlos in die Suspension zurückfließen.

Dabei sollten diese seitlichen Leisten zumindest im Wesentlichen radial und im Interesse der Einfachheit gerade verlaufen. Die Leisten können sich radial über die gesamte Filterscheibe oder nur über einen, insbesondere einen hoch beanspruchten Teil der Filterscheibe erstrecken. Hierbei kann es ebenso vorteilhaft sein, wenn einzelne oder alle Filterscheiben beidseitig, vorzugsweise in gleicher Winkelposition Leisten tragen.

Weil die Filterscheiben überwiegend kreissektorförmig aufgebaut sind, wird die Anbringung der radialen Leisten vereinfacht, wenn diese zwischen den Sektoren verlaufen. Es genügt hierbei im Interesse einer geringen Turbulenzbildung, wenn die Filterscheibe beidseitig je 2 bis 6 derartige Leisten besitzt, so dass nicht zwischen allen Sektoren Leisten vorhanden sind.

Um den Druck auf die Filterscheiben beim Durchlaufen der Engstelle und die von diesen radialen Leisten erzeugten Turbulenzen zu begrenzen, sollte die Dicke der radialen Leisten kleiner als 5, insbesondere kleiner als 3,5 mm sein. Aus dem gleichen Grund sollte die Höhe der radialen Leisten kleiner als 35, vorzugsweise kleiner als 20 mm sein.

Die Stabilität der Filterscheiben kann zusätzlich erhöht werden, wenn die Filterscheiben eine permeable, bevorzugt perforierte, gewellte Oberfläche aufweisen.

Nachfolgend soll die Erfindung an mehreren Ausführungsbeispielen näher erläutert werden. In der beigefügten Zeichnung zeigen:
Figur 1: eine schematische Seitenansicht eines Scheibenfilters;
Figur 2: eine Teil-Draufsicht auf den Scheibenfilter;
Figur 3 a+b: unterschiedliche Führungselemente 6;
Figur 4: eine Teilansicht einer Filterscheibe 3 mit Führungselement 6 und Führungskanal 7 sowie
Figur 5 a+b: weitere Führungselemente 6.

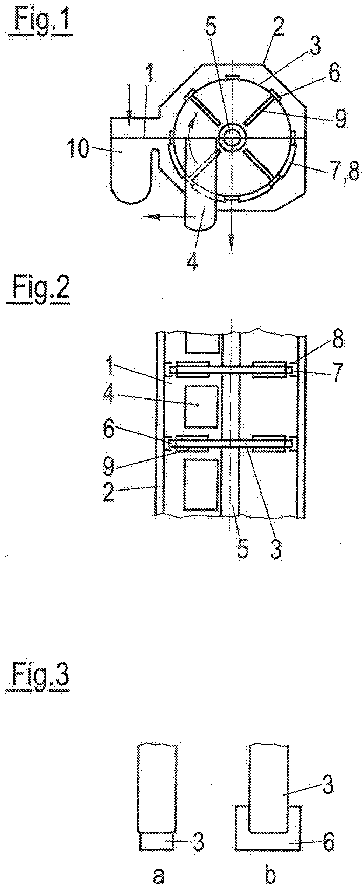

Die Faserstoffsuspension 1 wird gemäß Figur 1 über einen Einlauf 10 in den Behälter 2 des Scheibenfilters geleitet. Im Behälter 2 befindet sich eine horizontal verlaufende und rotierbar gelagerte Hohlwelle 5 mit mehreren axial voneinander beabstandeten Filterscheiben 3.

Die Filterscheiben 3 werden dabei von jeweils zwei scheibenförmigen, perforierten Filterelementen mit gewellter Oberfläche gebildet, die den Innenraum der Filterscheibe 3 begrenzen.

Um das Wasser aus der Suspension 1 abziehen zu können, steht die mit einer Unterdruckquelle verbundene Hohlwelle 5 mit dem Innenraum der Filterscheiben 3 in Verbindung.
Die sich dabei an den Filterelementen bildende Vliesschicht wird nach dem Auftauchen aus der Suspension 1 in den Stoffauslauf 4 befördert.

Hierzu befinden sich die Stoffausläufe 4 jeweils zwischen zwei benachbarten Filterscheiben 3, wie in Figur 2 zu erkennen.
Diese Stoffausläufe 4 bilden mit den Filterscheiben 3 jeweils eine Engstelle an der es zur Bildung von Bereichen mit hoher Konsistenz kommt. Infolgedessen werden die Filterelemente der Filterscheiben 3 beim Überstreichen dieser Bereiche einer erhöhten mechanischen Belastung ausgesetzt.
Zur Minimierung dieser im Wesentlichen axial auf die Filterelemente wirkenden Belastung wird der Austausch der Suspension 1 dieser Engstellen mit der Suspension 1 im Rest des Behälters 2 über mehrere, gleichmäßig über den Außenumfang verteilt an den Filterscheiben 3 befestigte Führungselemente 6 sowie an den Seiten der Filterscheiben 3 radial verlaufende Leisten 9 intensiviert. Im Ergebnis führt dies letztendlich zu einer ausgeglicheneren Verteilung der Stoffdichte der Suspension 1 im Behälter 2.

Da die Filterscheiben 3 meist aus mehreren, kreissektorförmigen Filterelementen aufgebaut sind, wird die Anbringung vereinfacht, wenn die radialen, zumindest auf der zu einem Stoffauslauf 4 weisenden Seite der Filterscheibe 3 angeordneten Leisten 9 zwischen den Sektoren der Filterscheiben 3 verlaufen.

Zur Vermeidung einer zu großen Belastung der Filterscheiben 3 ist die Dicke der radialen Leisten 9 kleiner als 3,5 mm und/oder die Höhe der radialen Leisten 9 kleiner als 35 mm.

Die am Außenumfang der Filterscheiben 3 befindlichen Führungselemente 6 fördern ebenfalls den Ausgleich der Stoffdichte der Suspension 1 im Behälter 2 indem sie Suspension 1 aus dem Bereich zwischen der Behälterwand und der Filterscheibe 3 aber auch zumindest teilweise zwischen dem Stoffauslauf 4 und der Filterscheibe 3 in den Rest des Behälters 2 fördern.

Hierbei ist wesentlich, dass die Stoffausläufe 4 in Höhe des Suspensionspegels möglichst nahe zur Hohlwelle 5 angeordnet sind und sich über 40 bis 60% des Radius der Filterscheiben 3 erstrecken. Die Begrenzung des Kanals zwischen Filterscheibe 3 und Stoffauslauf 4 auf einen radial möglichst weit innen liegenden Bereich verringert die axiale Belastung der Filterscheiben 3 und verbessert den Stoffaustausch im Behälter 2.
Dabei hat es sich als effizient erwiesen, wenn die Führungselemente 6, wie in den Figuren 1 bis 4 dargestellt, als sich in Umfangsrichtung der Filterscheiben 3 erstreckende Leisten ausgebildet sind.
Eine optimale Wirkung dieser Umfangs-Leisten ergibt sich hierbei, wenn sich diese in Umfangsrichtung zwischen 50 und 150 mm erstrecken und eine Höhe in radialer Richtung von weniger als 70 mm haben.

Meist genügt es dabei, wenn sich die leistenförmigen Führungselemente 6 gemäß Figur 3 a ausschließlich über den Außenumfang der Filterscheibe 3 erstrecken.

Um die Förderwirkung der leistenförmigen Führungselemente 6 auf die Engstelle zum Stoffauslauf 4 zu verstärken, können sich die Führungselemente 6 aber auch auf eine oder, wie in Figur 3b dargestellt, auf beide Seiten der Filterscheibe 1 erstrecken.

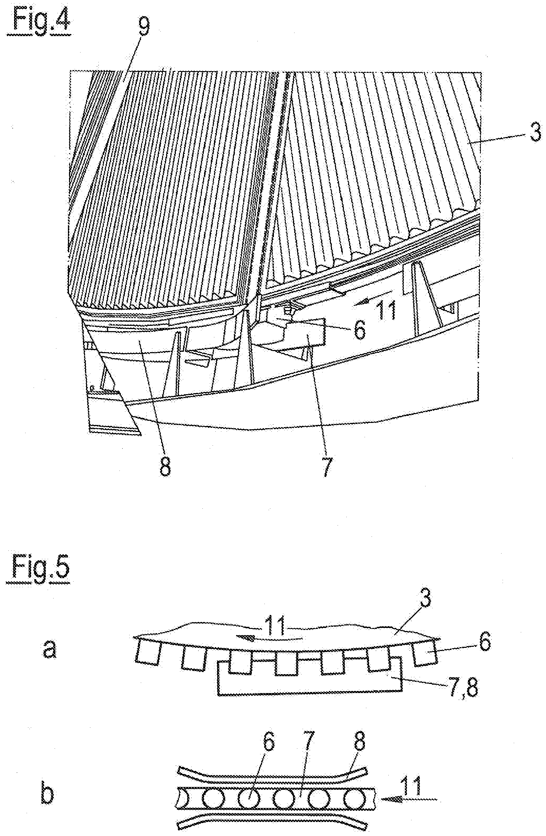

Trotz der Verminderung der Belastung der Filterscheiben 3 reichen die axialen Kräfte oft dennoch aus, um ein übermäßiges Verbiegen in axialer Richtung und damit eventuell auch eine Beschädigung zu verursachen.
Daher werden die Führungselemente 6, wie in Figur 1 angedeutet und in Figur 4 im Detail gezeigt, in der Suspension 1 durch mehrere, in Rotationsrichtung 11 hintereinander angeordnete, ein Verbiegen der Filterscheibe 3 in axialer Richtung begrenzende Führungskanäle 7 des Behälters 2 geführt.

Dabei werden die Führungskanäle 7 im Interesse einer einfachen Konstruktion jeweils von zwei parallelen, axial voneinander beabstandeten, in Rotationsrichtung 11 verlaufenden und am Behälter 2 befestigten Führungsschienen 8 gebildet. Für eine ausreichende Führung ist der Abstand der Führungselemente 6 zu den Begrenzungen des Führungskanals 7 kleiner als 5 mm.
Alternativ können einzelne oder alle Führungselemente 6 ebenso, wie in Figur 5a+b zu erkennen, von sich in radialer Richtung auf den Außenumfang der Filterscheiben 3 erstreckenden Führungsbolzen gebildet werden. Auch hier werden die Filterscheiben 3 durch die Führung der Führungsbolzen mit Hilfe der Führungskanäle 7 stabilisiert.

## Patentansprüche

1. Scheibenfilter zur Abtrennung von Flüssigkeiten aus einer Suspension (1), insbesondere einer Faserstoffsuspension, mit einem Behälter (2) zur Aufnahme der Suspension (1), einer sich horizontal im Behälter (2) erstreckenden und rotierbar gelagerten Hohlwelle (5), mehreren senkrecht auf der Hohlwelle (5) befestigten, axial voneinander beabstandeten und flüssigkeitsdurchlässigen Filterscheiben (3), deren Innenraum mit der Hohlwelle (5) in Verbindung steht sowie zwischen den Filterscheiben (3) angeordneten Stoffausläufen (4), **dadurch gekennzeichnet, dass** am Außenumfang der Filterscheibe (3) wenigstens ein sich radial über die Filterscheibe (3) hinaus erstreckendes Führungselement (6) vorhanden ist, welches in der Suspension (1) durch mehrere, in Rotationsrichtung (11) hintereinander angeordnete und ein Verbiegen der Filterscheibe (3) in axialer Richtung begrenzende Führungskanäle (7) des Behälters (2) geführt wird.

2. Scheibenfilter nach Anspruch1, **dadurch gekennzeichnet, dass** über den Außenumfang der Filterscheibe (3), vorzugsweise gleichmäßig verteilt, mehrere Führungselemente (6) angeordnet sind.

3. Scheibenfilter nach Anspruch 1 oder 2, **dadurch gekennzeichnet, dass** die radiale Länge der Führungselemente (6) über den Außenumfang der Filterscheiben (3) hinaus kleiner als 120, vorzugsweise kleiner als 70 mm ist.

4. Scheibenfilter nach einem der vorhergehenden Ansprüche, **dadurch gekennzeichnet, dass** die Führungselemente (6) von sich in radialer Richtung auf den Außenumfang der Filterscheiben (3) erstreckenden Führungsbolzen gebildet werden.

5. Scheibenfilter nach einem der Ansprüche 1 bis 3, **dadurch gekennzeichnet, dass** die Führungselemente (6) von sich in Umfangsrichtung erstreckenden Leisten gebildet werden.

6. Scheibenfilter nach Anspruch 5, **dadurch gekennzeichnet, dass** sich die Führungselemente (6) ausschließlich über den Außenumfang der Filterscheibe (3) erstrecken.

7. Scheibenfilter nach Anspruch 5, **dadurch gekennzeichnet, dass** sich die Führungselemente (6) auch wenigstens auf eine, einem Stoffauslauf (4) gegenüberliegende Seite der Filterscheibe (3) erstrecken.

8. Scheibenfilter nach Anspruch 7, **dadurch gekennzeichnet, dass** sich die Führungselemente (6) auf beide Seiten der Filterscheibe (3) erstrecken.

9. Scheibenfilter nach einem der Ansprüche 5 bis 8, **dadurch gekennzeichnet, dass** die Ausdehnung der Leisten in Umfangsrichtung der Filterscheibe (3) zwischen 50 und 250 mm, vorzugsweise zwischen 50 und 150 mm liegt.

10. Scheibenfilter nach einem der vorhergehenden Ansprüche, **dadurch gekennzeichnet, dass** die Führungskanäle (7) jeweils von zwei parallelen, am Behälter (2) befestigten und vorzugsweise überwiegend in Rotationsrichtung (11) verlaufenden Führungsschienen (8) gebildet werden.

11. Scheibenfilter nach einem der vorhergehenden Ansprüche, **dadurch gekennzeichnet, dass** der Abstand der Führungselemente (6) zu den Begrenzungen des Führungskanals (7) kleiner als 10 mm, vorzugsweise kleiner als 5 mm ist.

12. Scheibenfilter nach einem der vorhergehenden Ansprüche, **dadurch gekennzeichnet, dass** die Filterscheiben (3) kreissektorförmig aufgebaut sind.

13. Scheibenfüter nach einem der vorhergehenden Ansprüche, **dadurch gekennzeichnet, dass** die Filterscheiben (3) vorzugsweise zwischen den Kreissektoren radial verlaufende Leisten (9) aufweisen.

14. Scheibenfilter nach einem der vorhergehenden Ansprüche, **dadurch gekennzeichnet, dass** die Filterscheiben (3) eine permeable, bevorzugt perforierte, gewellte Oberfläche aufweisen.

15. Scheibenfilter nach einem der vorhergehenden Ansprüche, **dadurch gekennzeichnet, dass** sich die Stoffausläufe (4) in Höhe des Suspensionspegels nur über einen radial innen liegenden Teilabschnitt der Filterscheiben (3) erstrecken, insbesondere möglichst nahe zur Hohlwelle (5) angeordnet sind und sich über 40 bis 60% des Radius der Filterscheiben (3) erstrecken.

## Claims

1. Disc filter for separating liquids from a suspension (1), in particular a fibrous suspension, having a container (2) for receiving the suspension (1), a rotatably mounted hollow shaft (5) that extends horizontally in the container (2), a plurality of liquid-permeable filter discs (3) that are fastened perpendicularly to the hollow shaft (5) and are axially spaced apart from one another, the interior space of said filter discs (3) being connected to the hollow shaft (5), and material outlets (4) that are disposed between the filter discs (3), **characterized in that** at least one guide element (6) that extends radially beyond the filter disc (3) is present on the external circumference of the filter disc (3), said guide element (6) in the suspension (1) being guided through a plurality of guide ducts (7) of the container (2) that are sequentially disposed in the rotation direction (11) and delimit flexing of the filter disc (3) in the axial direction.

2. Disc filter according to Claim 1, **characterized in that** a plurality of guide elements (6), preferably in a uniformly distributed manner, are disposed across the external circumference of the filter disc (3).

3. Disc filter according to either of Claims 1 and 2, **characterized in that** the radial length of the guide elements (6) across the external circumference of the filter discs (3) is less than 120, preferably less than 70 mm.

4. Disc filter according to one of the preceding claims, **characterized in that** the guide elements (6) are formed by guide bolts that in the radial direction extend to the external circumference of the filter discs (3).

5. Disc filter according to one of Claims 1 to 3, **characterized in that** the guide elements (6) are formed by strips that extend in the circumferential direction.

6. Disc filter according to Claim 5, **characterized in that** the guide elements (6) extend exclusively across the external circumference of the filter disc (3).

7. Disc filter according to Claim 5, **characterized in that** the guide elements (6) also extend at least to one side of the filter disc (3) that is opposite a material outlet (4).

8. Disc filter according to Claim 7, **characterized in that** the guide elements (6) extend to both sides of the filter disc (3).

9. Disc filter according to one of Claims 5 to 8, **is** the extent of the strips in the circumferential direction of the filter disc (3) is between 50 and 250 mm, preferably between 50 and 150 mm.

10. Disc filter according to one of the preceding claims, **characterized in that** the guide ducts (7) are in each case formed by two parallel guide rails (8) that are fastened to the container (2) and run preferably largely in the rotation direction (11).

11. Disc filter according to one of the preceding claims, **characterized in that** the spacing of the guide elements (6) from the delimitations of the guide duct (7) is less than 10 mm, preferably less than 5 mm.

12. Disc filter according to one of the preceding claims, **characterized in that** the filter discs (3) are constructed in the manner of circular sectors.

13. Disc filter according to one of the preceding claims, **characterized in that** the filter discs (3) have strips (9) that preferably run in a radial manner between the circular sectors.

14. Disc filter according to one of the preceding claims, **characterized in that** the filter discs (3) have a permeable, preferably perforated, undulated surface.

15. Disc filter according to one of the preceding claims, **characterized in that** the material outlets (4) at the height of the suspension level extend only across a radially inward part-portion of the filter discs (3), in particular are disposed so as to be as close as possible to the hollow shaft (5), and extend across 40 to 60% of the radius of the filter discs (3).

## Revendications

1. Filtre à plaques destiné à séparer des liquides d'une suspension (1), en particulier d'une suspension de fibres, le filtre présentant
un récipient (2) qui reprend la suspension (1),
un arbre creux (5) s'étendant horizontalement dans le récipient (2) et monté à rotation,
plusieurs plaques de filtration (3) fixées perpendiculairement sur l'arbre creux (5), disposées à distance axiale les uns des autres, perméables aux liquides et dont l'espace intérieur communique avec l'arbre creux (5) et
des débordements de matière (4) disposés entre les plaques de filtration (3),
**caractérisé en ce que**
au moins un élément de guidage (6) guidé dans la suspension (1) par plusieurs canaux de guidage (7) du récipient (2) disposés les uns derrière les autres dans la direction de rotation (11), limitant la flexion des disques de filtration (3) dans la direction axiale et s'étendant radialement au-delà du disque de filtration (3) est prévu à la périphérie extérieure du disque de filtration (3).

2. Filtre à plaques selon la revendication 1, **caractérisé en ce que** plusieurs éléments de guidage (6), de préférence répartis régulièrement, sont disposés à la périphérie extérieure de la plaque de filtration (3).

3. Filtre à plaques selon les revendications 1 ou 2, **caractérisé en ce que** la longueur radiale des éléments de guidage (6) au-delà de la périphérie extérieure des plaques de filtration (3) est inférieure à 120 et de préférence inférieure à 70 mm.

4. Filtre à plaques selon l'une des revendications précédentes, **caractérisé en ce que** les éléments de guidage (6) sont formés de goujons de guidage qui s'étendent dans la direction radiale à la périphérie extérieure des plaques de filtration (3).

5. Filtre à plaques selon l'une des revendications 1 à 3, **caractérisé en ce que** les éléments de guidage (6) sont formés par des lattes et s'étendent dans la direction périphérique.

6. Filtre à plaques selon la revendication 5, **caractérisé en ce que** les éléments de guidage (6) s'étendent exclusivement au-delà de la périphérie extérieure de la plaque de filtration (3).

7. Filtre à plaques selon la revendication 5, **caractérisé en ce que** les éléments de guidage (6) s'étendent également au moins sur le côté de la plaque de filtration (3) situé face à un débordement de matière (4).

8. Filtre à plaques selon la revendication 7, **caractérisé en ce que** les éléments de guidage (6) s'étendent sur les deux côtés de la plaque de filtration (3).

9. Filtre à plaques selon l'une des revendications 5 à 8, **caractérisé en ce que** l'extension des lattes dans la direction périphérique de la plaque de filtration (3) est comprise entre 50 et 250 mm et de préférence entre 50 et 150 mm.

10. Filtre à plaques selon l'une des revendications précédentes, **caractérisé en ce que** chacun des canaux de guidage (7) est formé de deux rails de guidage (8) parallèles fixés sur le récipient (2) et s'étendant de préférence principalement dans la direction de rotation (11).

11. Filtre à plaques selon l'une des revendications précédentes, **caractérisé en ce que** la distance entre les éléments de guidage (6) et les frontières du canal de guidage (7) est inférieure à 10 mm et de préférence inférieure à 5 mm.

12. Filtre à plaques selon l'une des revendications précédentes, **caractérisé en ce que** les plaques de filtration (3) ont une structure en forme de secteur circulaire.

13. Filtre à plaques selon l'une des revendications précédentes, **caractérisé en ce que** les plaques de filtration (3) présentent des lattes (9) qui s'étendent radialement de préférence entre les secteurs circulaires.

14. Filtre à plaques selon l'une des revendications précédentes, **caractérisé en ce que** les plaques de filtration (3) présentent une surface perméable et ondulée, de préférence perforée.

15. Filtre à plaques selon l'une des revendications précédentes, **caractérisé en ce que** les débordements de matière (4) s'étendent à la hauteur du niveau de la suspension uniquement sur une partie radialement intérieure des plaques de filtration (3), de préférence aussi proche que possible de l'arbre creux (5) et sur 40 à 60 % du rayon des plaques de filtration (3).
